# EUROPÄISCHE PATENTANMELDUNG

(11) **EP 2 053 080 A1**
(43) Veröffentlichungstag der Anmeldung: **29.04.2009**
(21) Anmeldenummer: 08166536.6
(22) Anmeldetag: 14.10.2008
(51) Int. Cl.: C08J 9/12

(54) **Schallisolierung mit CO2-beladener Kompakt-Polyurethan-Schaumstoff-(RIM)-Schicht**

(30) Priorität: 19.10.2007 DE 102007050100
(71) Anmelder: Entwicklungsgesellschaft für Akustik (EfA) mit beschränkter Haftung, 58454 Witten (DE)
(72) Erfinder: Blomberger, Anton, 93090 Bach/Frengkofen (DE); Nißl, Konrad, 84085 Langquaid (DE); Schulze, Volkmar, 84069 Schierling (DE); Schneider, Marco, 45239 Essen (DE); Kursch, Volker, 45141 Essen (DE)
(74) Vertreter: Jönsson, Hans-Peter

(57) **Zusammenfassung**

Polyurethan-Kompakt-Schaumstoff mit einem CO₂-Beladungsgrad in einem Bereich von 0,03 bis 0,20%.

## Beschreibung

Die Erfindung betrifft (Schaumstoff-) Materialien aus Polyurethan, ein Verfahren zu ihrer Herstellung und ihre Verwendung zur thermischen und/oder akustischen Isolation.

In der Automobilindustrie wird heute bei Schallisolierungen stets unter den Prämissen Kosten, akustische Wirksamkeit und Gewicht gearbeitet. Seitens der Automobilhersteller (OEM) wird bei Feder-Masse- und Masse-Absorber-Systemen für die Masseauslegung bedarfsorientiert das Mindestflächengewicht ebenso wie das Höchstgewicht vorgegeben. Dieses wird auf der Basis von akustischen Messungen am Gesamt-Kraftfahrzeug und am Bauteil sowie basierend auf akustischen Vorausberechnungen festgelegt. Das Ziel besteht dabei, insbesondere entsprechend der jeweiligen Motorisierung, eine ausreichende Isolation/Dämmung des Kraftfahrzeug-Innenraums gegenüber Luft- und Körperschall zu erreichen.

Solche akustischen Leistungsfähigkeiten, d.h. Dämmungseigenschaften, werden durch wohl bekannte Methoden des Standes der Technik, wie zum Beispiel der lokalen Anpassung der Masseverteilung (des Flächengewichtes), realisiert. Ebenso werden zu diesem Zweck auch so genannte Schwerschichten eingesetzt. Dabei handelt es sich in der Regel um hochgefüllte, das heißt kompakte und damit schwere Polyurethan-Kompaktmassen oder -Schaumstoffe, die durch das so genannte Reaktionsspritzguss-Verfahren hergestellt werden.

Das Reaktionsspritzguss-Verfahren (Reaction Injection Molding, RIM) ist ein Urformverfahren zur Herstellung von unter anderem Polyurethan-Kunststoffformteilen (siehe beispielsweise M.H. Bopp, Polyurethane - für akustischen Komfort im modernen Fahrzeugbau, in Polyurethane Engineering 2000, VDI Verlag GmbH, Düsseldorf 2000, S.229-239). Hierbei werden zwei Komponenten, eine Polyol- und eine Isocyanatkomponente (und eventuell weitere Zusätze), in einem Mischer zunächst intensiv vermischt und anschließend als Reaktionsmasse in ein formgebendes Werkzeug, die sogenannte Spritzguss-/Schäumform, gespritzt. Dort schäumt die Reaktionsmasse gegebenenfalls auf und es härten die Komponenten zu einem fertigen Kunststoffbauteil aus, die chemische Reaktion findet also im Werkzeug statt. Mittels RIM-Technik werden unter anderem Autokarosserieteile, Schuhsohlen, Fensterprofile und Fernsehgehäuse produziert.

Kennzeichnend für dieses Verfahren ist unter anderem ein geringer Zuhaltedruck der Formwerkzeuge. Die Formstandzeiten, also die Zeiten, die benötigt werden, um das Formwerkzeug für ein neues Formteil zur Verfügung stellen, dieses Verfahrens liegen im Bereich von einer bis fünf Minuten.

Ein weiterer Vorteil dieses Verfahrens besteht in der Möglichkeit, zum Beispiel für die Befestigung von Kunststoffformteilen benötigte Vorrichtungen wie Gewinde, Angeln oder auch Bügel beim Herstellungsprozess direkt umschäumen zu können, wodurch eine besonders innige Befestigung erzielt wird. Dadurch können zusätzliche Arbeitsschritte der Befestigung dieser Vorrichtungen am Kunststoffformteil eingespart werden.

Darüber hinaus weisen Reaktionsmassen aus dem RIM-Prozess gegenüber den beim Spritzgießen verwendeten thermoplastischen Massen aufgrund ihrer niedrigen Viskosität ein günstigeres Fließverhalten auf. Somit lassen sich bei gleicher Wanddicke größere Fließwege erreichen. Dem steht ein erhöhter Aufwand bei der Dichtung und Dosierung gegenüber.

Beim Reinforced-RIM-Verfahren (RRIM) erzeugt man mit Verstärkungsmitteln, insbesondere Glasfasern, Mineralfasern oder Glaskugeln verstärkte Schaumstoffe. Diese im Materialgefüge eingebetteten Verstärkungsmittel erhöhen die mechanischen Eigenschaften der Kunststoffteile.

So werden in DE 10 2004 030 196 A1 beispielsweise Polyurethan-Formkörper dadurch hergestellt, dass eine mit technischen Gasen wie CO₂ beladene Polyurethanmischung zur Beaufschlagung einer Sandwich-Struktur aus einer Kernschicht und zwei Verstärkungsfaserdeckschichten oder einer Verstärkungsfasermatte verwendet wird und das erhaltene Intermediat in einer Form ausgehärtet wird. Eine zusätzliche Härtung/Versteifung kann dadurch erzielt werden, dass während der Beaufschlagung mit der Polyurethanmischung geschnittene Fasern partiell oder ganzflächig aufgetragen werden. Die so erhaltenen Formkörper werden zwar durch zusätzliche Materialien verstärkt jedoch nicht durch das RIM- bzw. RRIM-Verfahren hergestellt, sondern durch Spritzen der Polyurethanmischung auf die Sandwich-Struktur.

Neben einer hohen Festigkeit besitzen Polyurethan-RIM-Formkörper noch weitere wichtige Vorteile, wie beispielsweise Hitzebeständigkeit, thermische und/oder akustische Isolation, Formstabilität sowie hohe Chemikalienbeständigkeit insbesondere gegenüber Lösungsmitteln, Wetter- und Alterungsstabilität.

Die durch das RIM-Verfahren hergestellten Polyurethan-Formteile können hinsichtlich ihrer mechanischen Eigenschaften durch die genaue Wahl der Prozessbedingungen und Zusätze in weiten Bereichen variiert werden.

Sollen solche Polyurethan-RIM-Schaumstoffformteile als akustische Isolationsmaterialien zum Beispiel im Kraftfahrzeugsektor eingesetzt werden, so müssen zwei sich widerstrebende Tendenzen miteinander in Einklang gebracht werden: Obwohl Bauteile einer geringen Masse erwünscht sind (da verbunden mit einem geringeren Energieverbrauch zum Betrieb des Kraftfahrzeugs) sollten diese auf der anderen Seite möglichst schwer sein, da sie nur so von zufriedenstellender akustischer Wirksamkeit sind. Die Lösungen dieses Problems im Stand der Technik sind hier nicht optimal, da die erhaltenen akustischen Isolationsbauteile mit einer hohen Masse behaftet sind.

Es ist daher Aufgabe der vorliegenden Erfindung, eine Verbesserung von akustisch wirksamen und über das RIM-Verfahren hergestellten Polyurethan-Schaumstoffformteilen dergestalt zu erzielen, dass bei vorgegebener Schichtdicke eine Massenreduktion bei gleichbleibender akustischer Wirksamkeit erreicht wird.

In einer ersten Ausführungsform wird die der Erfindung zugrunde liegende Aufgabe gelöst durch einen Polyurethan-Schaumstoff, der einen CO₂-Beladungsgrad in einem Bereich von 0,03 bis 0,20% aufweist.

Unter dem Beladungsgrad ist dabei der massenmäßige Anteil des zudosierten CO₂ an der Gesamtmasse aller übrigen Bestandteile der Polyurethan-Komponenten zu verstehen. Dabei ist zu berücksichtigen, dass dieser rechnerisch ermittelt wird und sich somit nicht auf den fertigen Schaumstoff bezieht (da der fertige Schaumstoff anteilsmäßig ebenfalls offene Zellen enthalten kann, wäre ein auf diesen bezogener Beladungsgrad zeitabhängig, denn das CO₂ würde mit der Zeit aus den offenen Zellen herausdiffundieren).

Bevorzugt liegt der CO₂-Beladungsgrad dabei in einem Bereich von 0,06 bis 0,16%.

Darüber hinaus wird es als besonders bevorzugt angesehen, wenn die Dichte des fertigen Formkörpers in einem Bereich von 1,25 bis 1,50 g/cm³, die Shore(A)Härte in einem Bereich von 45 bis 65 und das Biegemodul (bestimmt nach DIN 53350) längs und quer in einem Bereich von 85 bis 125 N/mm² liegt.

Überraschend hat sich nämlich gezeigt, dass durch einen Polyurethan-Schaumstoff, dessen Biegemodule, Dichte und Shore(A)Härte innerhalb der oben angegebenen Bereiche liegen, zum einen eine deutliche Gewichtsreduktion gegenüber herkömmlichen zur Schallisolation verwendeten Polyurethan-Schaumstoffen erzielt wird, sich zum anderen aber die akustische Wirksamkeit im Rahmen der Messtoleranz nicht verschlechtert. Dies bedeutet einen großen Vorteil, da bei vorgegebener Schichtdicke für die gleiche akustische Isolation nun massenmäßig weniger Material aufgewendet werden muss, das Fahrzeug leichter wird und damit dessen Energieverbrauch sinkt.

Geringere Shore(A)Härten als die oben angegebenen gehen in der Regel einher mit einer geringeren Formstabilität des Materials, was aufgrund der fehlenden Robustheit unerwünscht ist.
Die Shore(A)Härte resultiert dabei aus der Wahl der Grundkomponenten der Polyol- und Isocyanatmischung des Schaumstoffsystems sowie der Netzwerkdichte, die auch durch das Mischungsverhältnis variiert werden kann.

Bevorzugt handelt es sich bei dem aufgeschäumten oder mikrogeschäumten Kompakt-PUR-Massen um einen geschlossenzelligen Schaumstoff (bei welchem die Zellwände geschlossen sind und der Schaumstoff somit für fluide Medien nicht permeabel ist).

Für eine gute akustische Dämmungs-Wirkung ist jedoch gleichermaßen ein überwiegend geschlossenzelliger Schaumstoff von Vorteil.

Überwiegend geschlossenzellig heißt in diesem Zusammenhang, dass mindestens 50% des vom Schaumstoffmaterial eingenommenen Volumens aus geschlossenen Zellen bestehen.

Als Polyolkomponente wird bevorzugt zumindest eines der im Rahmen der Polyurethanherstellung hinlänglich bekannten Polyetherpolyole verwendet. Als Isocyanatkomponente kommt bevorzug mindestens eines ausgewählt aus der Gruppe der Diphenylmethandiisocyanate (MDIs) zum Einsatz. Gemische verschiedener Polyol- bzw. Isocyanatkomponenten sind aber ebenfalls möglich.

Auch ist es möglich, die erfindungsgemäßen Schaumstoffe zum Beispiel durch Anwendung des RRIM-Verfahrens zu verstärken. Bevorzugt verwendet man dabei Füllstoffe wie Gesteinsmehle, vorzugsweise Schwerspat, Kreide, Gips, Magnetit o.ä., Glasfasern, Mineralfasern, Naturfasern und/oder Glaskugeln.

In einer zweiten Ausführungsform wird die der Erfindung zugrunde liegende Aufgabe gelöst durch die Bereitstellung eines Verfahrens, mit welchem man die erfindungsgemäßen Polyurethan-Schaumstoffe herstellen kann.

Es hat sich gezeigt, dass diese über das apparativ einfach durchführbare RIM-Verfahren erhältlich sind, wenn man dafür sorgt, dass das Gemisch aus Polyolkomponente/n und Isocyanatkomponente/n und gegebenenfalls weiteren Füllstoff/en vor dem Eintritt in die Spritzgussform CO₂ enthält. Durch die Anwesenheit dieses Treibgases wird nämlich erzielt, dass das Polyol-/Isocyanat-Gemisch bei Eintritt in die Spritzgussform aufschäumt und die erfindungsgemäße Struktur des Polyurethan-Schaumstoffes erhalten wird. Gleichzeitig setzt der sich in der Spritzgussform aufbauende CO₂-Druck weiterem, ebenfalls mit Druck nachströmendem Polyol-/Isocyanat-Gemisch weniger Widerstand entgegen, da der erhaltene Schaumstoff ein geringeres Raumgewicht besitzt als es ohne die Anwesenheit von CO₂ der Fall wäre. Das heißt, es wird eine bessere Formfüllung durch weniger Materialgegendruck erreicht.

Die Anwendung des RIM-Verfahrens zielt vornehmlich auf die Herstellung von Schwerschäumen ab, also von Schäumen, die auch bedingt durch ihre ausreichend hohe Masse eine Schallabsorption im Rahmen eines Feder-Masse- bzw. Masse-Absorber-Aufbaus erzielen. Bei diesen Schaumstoffen würde man nicht versuchen CO₂ einzubringen, da dies üblicherweise mit einer zunächst vermutbar unerwünschten Masseabnahme des Schaumstoffes einhergehen sollte. Die vorliegende Erfindung tut jedoch genau dies: Zwar ist der Einsatz von CO₂ tatsächlich mit einer Massenabnahme verbunden, doch stellt sich diese im Nachhinein nicht als unerwünscht heraus, da im Rahmen der Messtoleranz keine Verschlechterung der akustischen Wirksamkeit des leichteren Schaumstoffes resultiert. Der durch den CO₂-Einsatz verringerte Biegemodul hat einen positiven Einfluss auf die Dämmung; dadurch wird der Masse "verlust" kompensiert.

Um das Gemisch der Polyol-/Isocyanatkomponente/n mit CO₂ zu versehen, bieten sich zwei Alternativen an: Zum einen kann das CO₂ in flüssiger oder gasförmiger Form zugesetzt werden. Zum anderen kann durch die Reaktion der Isocyanatkomponente mit Wasser CO₂ auf chemischem Weg erzeugt werden.

Letztere Variante kann sich zum Beispiel dann anbieten, wenn ein gewisser Anteil an Harnstoffgruppierungen zur Veränderung der physikalischen Eigenschaften im Schaumstoff angestrebt wird.

Soll CO₂ von außen zugeführt werden, so setzt man es bevorzugt der Polyolkomponente zu. Dies kann zum Beispiel so erfolgen, dass man das CO₂ in flüssiger Form durch einen zu diesem Zweck bestimmten Mischkopf der Polyolkomponente zudosiert. Dies gestaltet sich von daher sehr einfach, da das CO₂ aus handelsüblichen Flaschen unter Zuhilfenahme eines Steigrohres sehr einfach zudosiert werden kann.

Möchte man nicht mit einer solchen Mischkopfbeladung arbeiten, so bietet sich alternativ das so genannte Batch-Verfahren an. Man schaltet dazu zwischen dem Polyolvorratsbehälter und dem für die Mischung mit der/den Isocyanatkomponente/n vorgesehenen Mischkopf einen zusätzlichen Beladebehälter, in dem die Beladung der Polyolkomponente/n mit gasförmigem CO₂ erfolgt. Kritisch ist hierbei, dass es beim Batch-Verfahren zu einer Flotation (zum Aufschwimmen) der Füllstoffteilchen kommen kann.

Für Schaumstoffe, die besonderen mechanischen Ansprüchen genügen müssen, kann es sich anbieten, diese durch zum Beispiel durch das RRIM-Verfahren mit zusätzlichen Füllstoffen zu verstärken. Diese Füllstoffe können dabei ganz unterschiedlicher Natur sein. Diese Füllstoffe können entweder der/den Polyol- oder Isocyanatkomponente/n oder ihrem Gemisch zugesetzt werden oder sich aber schon in der Spritzguss- oder Schäumform befinden.
In ähnlicher Weise können sich Teile von Elementen, die zum Beispiel der Befestigung des Schaumstoffteils dienen sollen, schon in der Spritzguss- oder Schäumform befinden und während des Verfahrens umschäumt werden.

In einer dritten Ausführungsform wird die der Erfindung zugrunde liegende Aufgabe gelöst durch die Verwendung der erfindungsgemäßen Schaumstoffe zur thermischen und/oder akustischen Isolation. Besonders bevorzugt ist dabei die Verwendung, den erfindungsgemäßen Schaumstoff umfassender Bauteile im Kraftfahrzeugbereich als Stirnwandverkleidungen, Motorraumtrennwand, Tunnel sowie Massebelegung bei der Bodenverkleidung.

### Ausführungsbeispiel

Herstellung der Schwer-(Masse-) Schicht für eine Stirnwand mit einer vorgegebenen Schichtdicke von 3 mm:
Ein Polyurethanschaumstoff wurde durch das RIM-Verfahren unter Zusatz von flüssigem CO₂ am Mischkopf mit einer Menge von 1,25 g/s zudosiert, was einem Beladungsgrad von 0,11% entsprach.

Für den erhaltenen Polyurethanschaumstoff wurden die folgenden Werte gemessen:
Sh (A) : 55
Dichte: 1,40 g/cm³
Biegemodul (DIN 53350): längs 109 N/mm², quer 108
N/mm²Zugfestigkeit, längs: 3,5 N/mm²
Zugfestigkeit, quer: 2,6 N/mm²
Reißdehnung, längs: 168%
Reißdehnung, quer: 157%
Kältebeständigkeit: kein Bruch

Die Gewichts-Einsparung durch den Einsatz von CO₂ betrug 850 Gramm.

Im Vergleich dazu wurde eine Stirnwand analog wie im obigen erfindungsgemäßen Ausführungsbeispiel, jedoch ohne Zudosierung von CO₂ (d.h. CO₂-Beladungsgrad = 0,0%), hergestellt. Die Werte der zugehörigen physikalischen Größen wurden wie folgt bestimmt:
Sh(A): 82
Dichte: 1,81 g/cm³
Biegemodul (DIN 53350): längs 146 N/mm², quer 150 N/mm²

Dabei wurde eine herkömmliche RIM-Anlage der Firma Krauss-Maffei verwendet. Die erhaltene Stirnwand wies eine Fläche von ca. 1,1 m² auf. Die Messung der Shore(A)Härte-Werte wurde mit einer Messeinrichtung von Hildebrand (DIN 53505) vorgenommen. Die Werte für die Zugfestigkeit, Reißdehnung, Ein-/Weiterreißfestigkeit wurden mit einem Zug-/Druck-Messgerät von Lloyd Instruments bestimmt.

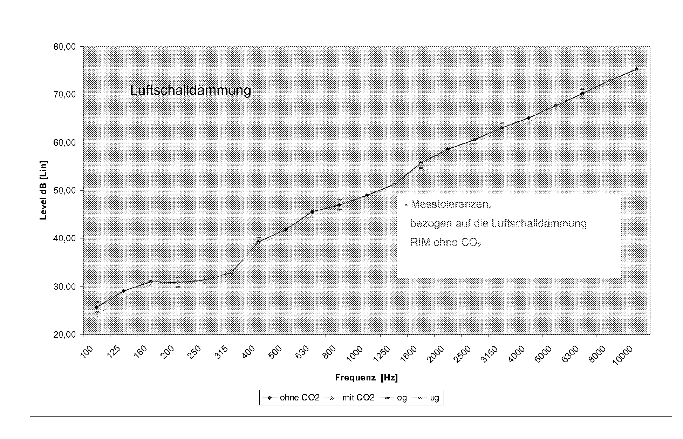

## Patentansprüche

1. Polyurethan-Kompakt-Schaumstoff mit einem CO₂-Beladungsgrad in einem Bereich von 0,03 bis 0,20%.

2. Schaumstoff nach Anspruch 1, **dadurch gekennzeichnet, dass** er einen CO₂-Beladungsgrad in einem Bereich von 0,06 bis 0,16% aufweist.

3. Schaumstoff nach einem der Ansprüche 1 oder 2, **dadurch gekennzeichnet, dass** er eine Dichte in einem Bereich von 1,25 bis 1,50 g/cm³ aufweist.

4. Schaumstoff nach einem der Ansprüche 1 bis 3, **dadurch gekennzeichnet, dass** er eine Shore(A)Härte in einem Bereich von 45 bis 65 aufweist.

5. Schaumstoff nach einem der Ansprüche 1 bis 4, **dadurch gekennzeichnet, dass** er einen Biegemodul längs und/oder quer in einem Bereich von 85 bis 125 N/mm² aufweist.

6. Schaumstoff nach einem der Ansprüche 1 bis 5, **dadurch gekennzeichnet, dass** er geschlossenzellig oder überwiegend geschlossenzellig ist.

7. Schaumstoff nach einem der Ansprüche 1 bis 6, **dadurch gekennzeichnet, dass** das Polyurethan mindestens eine Polyolkomponente (A) aus der Gruppe der Polyether umfasst.

8. Schaumstoff nach einem der Ansprüche 1 bis 7, **dadurch gekennzeichnet, dass** das Polyurethan mindestens eine Isocyanatkomponente (B) aus der Gruppe der Diphenylmethandiisocyanate umfasst.

9. Schaumstoff nach einem der Ansprüche 1 bis 8, **dadurch gekennzeichnet, dass** er Gesteinsmehle, insbesondere Schwerspat, Kreide, Gips, Magnetit, Glasfasern, Mineralfasern, Naturfasern und/oder Glaskugeln als Füllstoff enthält.

10. Verfahren zur Herstellung von Polyurethan-Schaumstoffen nach einem der Ansprüche 1 bis 9 durch Reaktionsspritzgießen unter Einsatz mindestens einer Polyolkomponente (A) und mindestens einer Isocyanatkomponente (B), **dadurch gekennzeichnet, dass** das Gemisch der Polyolkomponente/n und der Isocyanatkomponente/n (A+B) bei dem Eintritt in die Spritzguss- oder Schäumform CO₂ enthält.

11. Verfahren nach Anspruch 10, **dadurch gekennzeichnet, dass** man CO₂ der oder den Komponenten (A und/oder B) oder deren Gemisch (A+B) zusetzt.

12. Verfahren nach Anspruch 11, **dadurch gekennzeichnet, dass** man der oder den Polyolkomponente/n (A) CO₂ in flüssigem Zustand vor dem Vermischen mit der oder den Isocyanatkomponente/n (B) zusetzt.

13. Verfahren nach Anspruch 11, **dadurch gekennzeichnet, dass** man der oder den Polyolkomponente/n (A) CO₂ in gasförmigen Zustand vor dem Vermischen mit der oder den Isocyanatkomponente/n (B) zusetzt.

14. Verfahren nach Anspruch 10, **dadurch gekennzeichnet, dass** man CO₂ durch Reaktion der Isocyanatkomponente/n (B) oder des Gemisches (A+B) mit Wasser insitu erzeugt.

15. Verwendung des Schaumstoffes aus Polyurethan nach einem der Ansprüche 1 bis 9 zur thermischen und/oder akustischen Isolation.
